Europäisches Patentamt

European Patent Office

Office européen des brevets

(11) Publication number: **0 319 971**
**A2**

# EUROPEAN PATENT APPLICATION

(21) Application number: 88120503.3

(22) Date of filing: 08.12.88

(51) Int. Cl.⁴: **C09D 5/02 , C09D 5/38 , C09D 7/12**

(30) Priority: 10.12.87 US 130922

(43) Date of publication of application:
14.06.89 Bulletin 89/24

(84) Designated Contracting States:
BE DE ES FR GB IT SE

(71) Applicant: PPG INDUSTRIES, INC.
One PPG Place
Pittsburgh Pennsylvania 15272(US)

(72) Inventor: Suss, Naomi Ruth
6524 Crestwood Lane
Olmsted Falls Ohio 44138(US)
Inventor: Hartman, Marvis Edgar
144 Rawlings Run Road
Pittsburgh, Pa. 15238(US)
Inventor: Greigger, Barbara Ann
4679 Hidden Pond Drive
Allison Park, Pa. 15101(US)

(74) Representative: Sternagel, Hans-Günther, Dr.
et al
Patentanwälte Dr. Michael Hann Dr. H.-G.
Sternagel Sander Aue 30
D-5060 Bergisch Gladbach 2(DE)

(54) Water-based coating compositions containing aluminium pigments and antigassing agents.

(57) A water-based coating composition comprising aluminum pigments and an antigassing agent which is a phosphated acrylic polymer having a non-cyclic pendant group containing more than six carbon atoms.

EP 0 319 971 A2

# IMPROVED WATER-BASED COATING COMPOSITIONS CONTAINING ALUMINUM PIGMENTS AND ANTIGASSING AGENTS

## Background of the Invention

The present invention relates to water-based coating compositions containing metallic powder or flake pigments. More specifically, the present invention relates coating compositions which incorporate antigassing agents to prevent the tendency of such pigments to react with the aqueous phase of the compositions, with an accompanying evolution of gas.

It is well known to incorporate metallic pigments in coating compositions. In particular, it is an established practice to use aluminum flake pigments in compositions intended for the production of the so-called "glamour" finishes upon automobile bodies. The preferred appearance is believed to result from a differential light reflection effect depending upon the angle at which the coated surface is viewed.

Difficulties are, however, encountered in incorporating metallic pigments, in particular, those of aluminum or aluminum alloys, into water-based coating compositions. Said difficulties arise from the tendency of the pigment to react with water and with resulting evolution of hydrogen. This leads to problems in storing the compositions in closed containers.

Various ways have been proposed in which this "gassing" effect could be minimized or prevented, most of which involve some form of chemical treatment of the metallic pigment to render it less reactive towards the aqueous medium of the coating composition. It is known that orthophosphoric acid is effective for this purpose, but its presence in coating compositions leads to unacceptably poor humidity resistance in films derived from them. Alkyl esters of phosphoric acid overcome this problem to a limited extent, but their use involves an unsatisfactory compromise between the inhibition of gassing and deterioration of mechanical properties of the coatings, in particular, impaired intercoat adhesion between a basecoat film in which such an agent is present and a superimposed transparent topcoat film and/or cohesive adhesion of the basecoat itself. The same is true of non-phosphorous-containing treatment agents, such as the dimer acids which are proposed to be used for this purpose in British Patent Specification No. 2 043 092A.

U.S. Patent 4,621,112 discloses the use of a reaction product of phosphoric acid and one or more compounds which contain in the molecule at least one epoxide group and which also contains in the molecule at least one aromatic or alicyclic group wherein one or both reactants contain an aliphatic group of more than six carbon atoms with the aliphatic group not exceeding 65 percent by weight. The reaction product provides antigassing without sacrificing the mechanical properties of the coatings. In the instance of this additive, although mechanical properties are not affected, coating appearance, particularly "flop", are adversely affected. By "flop" is meant the visual change in brightness or lightness of the metallic aluminum flake with a change in viewing angle, that is, a change of from 90 to 180 degrees. The greater the visual change from a light to dark appearance, the better the flop. The flop accentuates the lines and curves of a coated article.

By the present invention, there is provided an improved water-based coating composition comprising an effective antigassing agent, which does not adversely affect mechanical properties or appearance of the coatings.

## Summary of the Invention

In accordance with the foregoing, the present invention encompasses an improved water-based coating composition containing a film-former, an aluminum pigment, and an antigassing agent; the improvement comprising the antigassing agent which is a phosphated acrylic polymer, containing in the polymer at least one acidic hydroxyl group linked to a phosphorous atom or a salt derivative thereof, characterized in that the acrylic polymer contains a non-cyclic pendant group of more than six carbon atoms. In the present embodiment of the invention, the acrylic polymer can be derived from (i) a phosphoric acid and (ii) an epoxy-functional acrylic polymer having a non-cyclic pendant group containing more than six carbon atoms. The term "pendant group", as used herein, is in contradistinction from groups in the polymer backbone.

The phosphated acrylic polymers of this invention effectively reduce or prevent gassing due to aluminum pigments in water-based composition without compromising coating appearance.

## Detailed Description of the Invention

The phosphated acrylic polymer can be prepared by reacting phosphoric acid with an epoxy-functional acrylic polymer, as described more fully hereinbelow.

The phosphoric acid, useful herein, includes hydrated to pure phosphoric acid, i.e., from about 70 to about 100 percent phosphoric acid and preferably about 85 percent phosphoric acid which is alternately referred to as orthophosphoric acid. Equivalents of the phosphoric acid, such as the various condensed forms, e.g., polymeric, partial anhydrides or esters of phosphoric acid, pyrophosphoric acid, or triphosphoric acid can also be used.

The epoxy-functional acrylic polymers, useful herein, can be prepared by copolymerizing an epoxy-functional monomer with another monomer described hereinbelow. The epoxy-functional monomer can be a glycidyl acrylate, a glycidyl methacrylate, allyl glycidyl ether or the like. The epoxy-functional monomer is employed in an amount of about 10 to about 25 percent by weight or higher, based on the total monomer content.

The other copolymerizable monomer, which is useful herein, is such as will provide a non-cyclic pendant group containing more than six carbon atoms, and preferably about 12 or more carbon atoms in a hydrocarbyl group such as an alkyl group. Illustrative examples thereof can be lauryl acrylate, lauryl methacrylate, stearyl acrylate, and stearyl methacrylate. These monomers can be employed in amounts of about 15 to about 30 percent by weight or higher, based on the total monomer content.

Yet, other copolymerizable monomers can be employed. Illustrative examples of these monomers can be hydroxyethyl acrylate, hydroxylethyl methacrylate, and methyl methacrylate.

The methods of preparing the epoxy-functional acrylic polymer are known in the art. Generally, free-radical addition polymerization methods are employed. The molecular weight of the resultant epoxy-functional acrylic polymer is from about 1,000 to about 10,000 and preferably from about 1,000 to about 6,000 weight average based on polystyrene standard, measured by gas permeation chromatography.

In the reaction of the phosphoric acid or its equivalent with the epoxy-functional acrylic polymer, the ratio of reactants is such that all or virtually all of the epoxy moiety is reacted.

Typically, there is employed herein mole ratios of about 0.5 to about 4 and preferably from about 1 to about 2 of the phosphoric acid to the epoxy-functional acrylic polymer, based on moles of phosphorous per epoxy group. Reaction temperatures of about 25°C to about 150°C and preferably about 50°C to about 100°C can be employed. The reaction can be a neat or in the presence of solvents that are usually inert to this reaction. Alternate methods of producing the phosphated acrylic polymer may be employed. For example, phosphoric acid and the epoxy-functional acrylic polymer, useful herein, can react, in situ to form the claimed phosphated acrylic polymer. Also, phosphoric acid may be reacted with an epoxy-functional monomer, and the reaction product can be copolymerized with other monomers. Phosphated acrylic polymers prepared by these and other alternate methods are encompassed by this invention.

The resultant phosphated acrylic polymer preferably has a molecular weight of from about 1,000 to about 10,000. Unlike art-related phosphated acrylic polymers, the claimed phosphated acrylic polymers do not require aromatic or cyclic groups in order to impart the required antigassing, adhesion, and appearance properties. Hence, water-based coating compositions consisting essentially of the claimed phosphated acrylic polymer have been found to impart the above properties.

The phosphated acrylic polymer is employed in amounts effective to reduce or prevent the gassing without adverse effects on application or performance of the coating composition. Typically, the phosphated acrylic polymer is employed in amounts of about 2 to 30 percent and preferably about 8 to 20 percent based on aluminum solids.

The film-former, useful herein; can be any material which can be employed for that purpose in a water-based coating composition. Non-limiting examples thereof can be aqueous addition polymers such as acrylic or vinyl polymers; condensation polymers such as aqueous polyesters, alkyds, polyurethane, amines and the like. The polymers are said to be aqueous, i.e., they are compatible with water. Solubilizing groups can be incorporated in the polymer in order to make them compatible with water. Hence, the phosphated acrylic polymer can be solubilized or dispersed in water by neutralizing it with a base such as an amine.

The metallic pigments, useful herein, may be any of those which are well known to be used for that purpose; these include, in particular, pigments composed of aluminum, copper, zinc and brass, but those composed of other malleable metals and alloys, such as nickel, aluminum-copper alloy, aluminum-zinc alloy, aluminum-nickel alloy and aluminum-magnesium alloy, are also suitable. The invention is of special interest in the case of metallic flake pigments intended for incorporation into water-borne coating compositions of which aluminum flake is the most commonly encountered example. The metallic flakes typically

3

have a thickness in the range of from about 0.01 to about 5 microns and a length or width in the range of from 1 to about 50 microns. Various procedures may be followed for introducing the inhibiting agents into the compositions of the invention. One suitable method is to bring the metallic pigment into contact with the agent prior to the incorporation of the pigment into the water-borne coating composition. This may be done by adding the agent to the pigment paste as this is normally supplied commercially, but the agent may be added at an even earlier stage, namely, during the actual production of the pigment; for example, it may be done between the steps of hammer-milling and reincorporating into white spirit or other organic mediums in the case of aluminum flake pigment. However, it has been found that, in the majority of cases, the full effect of the agent is achieved if the agent is simply introduced as a further ingredient in the formulation of the water-borne coating composition, i.e., during the blending of film-forming resin, metallic pigment and aqueous medium together with other conventional and optional constituents such as crosslinking agents, co-solvents, thickeners, and fillers. Preferably, the agent is added after some initial dispersion and de-agglomeration of the metallic pigment in the aqueous medium has taken place.

The coating compositions may also contain other conventional paint additives which are soluble or dispersible in water such as nonmetallic colored pigments and thickeners.

The invention is illustrated by the following non-limiting examples, in which parts and percentages are by weight.

## Example 1

In preparing the phosphated acrylic polymer of this invention, an epoxy-functional acrylic polymer was prepared and reacted with a phosphoric acid as follows:

| Ingredients | Parts by Weight (grams) |
| --- | --- |
| Charge A | |
| Arcosolv PTB ether[1] | 734.6 |
| Charge B | |
| Glycidyl methacrylate | 278.4 |
| Hydroxyethyl methacrylate | 576.02 |
| Methyl methacrylate | 393.6 |
| Lauryl methacrylate | 480.0 |
| Charge C | |
| VAZO 67[2] | 96.0 |
| Arcosolv PTB ether | 384.04 |
| Charge D | |
| VAZO 67 | 7.6 |
| Arcosolv PTB ether | 64.0 |
| Charge E | |
| VAZO 67 | 7.6 |
| Arcosolv PTB ether | 64.0 |
| Charge F | |
| Phosphoric acid (85%) | 225.9 |

(1) Propylene glycol mono tertiary butyl ether from Arco Chemical Company.
(2) 2,2-azobis-(2-methylbutyronitrile) from DuPont Chemical Company.

In a reaction vessel equipped with a condenser, nitrogen blanket, Dean Stark trap, addition funnels, mechanical stirrer, and a thermometer was heated Charge A, to reflux. Charges B and C were then introduced separately but simultaneously in the reaction vessel over a period of two hours and at a temperature range of 147°C to 151°C. Upon completion of the addition, and at 150°C, Charge D was added over a period of 15 minutes. The resulting mixture was held at 151°C for one hour to reflux. Charge E was then added over 15 minutes and the resulting mixture was held at 152°C for two hours to reflux.

The resultant mixture, comprising an epoxy functional acrylic polymer, was cooled to 50°C and Charge F was added thereto. The resultant mixture was held at 50°C for two hours, then allowed to cool and then analyzed.

Epoxy equivalent was infinity, solids content at 150°C (over two hours) was 54.5, acid value was 70.7, hydroxy value was 119.3, viscosity (Gardner-Holdt at 25°C) was Z-7 and molecular weight (Mw) was 2,902.

## Example 2

### Part A

A water-based pigmented basecoat was prepared, mixed with antigassing agents, and evaluated as follows.

The basecoat was prepared by adding the following ingredients into a properly equipped vessel, with mixing, in the order listed below.

| Ingredients | Parts by Weight (grams) |
|---|---|
| Hexyl cellosolve | 30.0 |
| Aluminum flakes[1] | 31.0 |
| Melamine resin[2] | 25.0 |
| High solids polyester resin[3] | 33.3 |
| Aqueous polyurethane resin[4] | 60.0 |
| Premix | |
| Deionized water | 60.0 |
| Aqueous polyurethane resin[4] | 88.2 |
| Catalyst solution[5] | 22.2 |

Deionized water                              88.0

Diisopropanolamine (75% aqueous)             3.3

(1)   Available from Hinz.

(2)   A high solids polyester derived from reacting two moles of trimethylpentane diol and one mole of hexahydrophthalic anhydride.

(3)   Cymel 325 available from American Cyanamide Company.

(4)   This was an aqueous polyurethane dispersion prepared from a linear isocyanate prepolymer, with a total solids content of 33 percent, a solvent content of 67 percent, and an acid value of 10.6.   It was prepared from:

        40.72 percent methylene bis (4-cyclohexyl isocyanate)
                      commercially available from Mobay as HYLENE W.
        27.30 percent of a polyester polyol having a number average
                      molecular weight of 2,000, a hydroxyl number of
                      56 and is commercially available from Witco as
                      FORMREZ 55-56.
        22.39 percent of a polyether polyol having a number average
                      molecular weight of 2,000, a hydroxyl number of
                      56, and is commercially available from Quaker
                      Oats as POLYMEG 2000.
         9.16 percent dimethylolpropionic acid
         3.11 percent ethylene diamine
         1.26 percent hydroxyethyl ethyleneimine
         0.49 percent neopentyl glycol
         0.44 percent butanol and
         0.04 percent dibutyltin dilaurate.

The solvent content was made up of 2.88 percent dimethylethanolamine; 15.10 N-methyl-2-pyrrolidone and 82.02 percent deionized water.   The pH was 8.8, the milliequivalents of acid per gram of dispersion was 0.190 and the milliequivalents of base per gram of dispersion was 0.259.

(5)   Thirty-two grams of "Cat 600" (from American Cyanamide) mixed with 4 grams of hexyl cellosolve (from Union Carbide) and 49 grams of deionized water; 15 grams of aqueous solution of diisopropanolamine was added thereto; pH was adjusted to 7.5 to 8.5 using additional diisopropanolamine.

Part B

Antigassing agents were added to samples of the basecoat as follows:

| Sample | Antigassing Agent | % of Composition | Parts by Weight[3] (grams) |
|--------|-------------------|------------------|----------------------------|
| 1 | none | --- | --- |
| 2 | VC-3-419[1] | 10 | 1.0 |
| 3 | Phosphated acrylic polymer[2] | 18 | 3.7 |

(1) A coating additive available from Mobil Chemical Company as a stabilizer which prevents or reduces gassing.

(2) Fifty grams of phosphated acrylic polymer (prepared in essentially the same manner as described in Example 1) in 15 grams of 75 percent diisopropanolamine in water.

(3) Parts by weight antigassing agent based on 230 grams of basecoat described above in Part A.

Antigassing effect was evaluated by drawing 2 cubic centimeters (cc) of the above basecoat (containing the respective antigassing agents) into a 10 cc syringe, sealing the tip of the syringe and placing the syringe in a hot room at 140° F. Volume of gas that evolved from the respective samples was a measure of antigassing affect.

| VOLUME OF GAS EVOLVED | | | |
|-----------------------|--------|---------|---------|
| Sample | 7 Days | 14 Days | 22 Days |
| 1 | 2.0 | 2.6 | 2.8 |
| 2 | 0 | 0.2 | 0.4 |
| 3 | 0.6 | 0.8 | 0.8 |

Effect of Antigassing Agent on Film Properties

The basecoats were sprayed out in two coats at 0.4 mil, on a primed substrate (primed with UNIPRIME, a cationic electrodepositable composition available from PPG Industries, Inc.), flashed for 3 minutes at 150° F, and clear coated by spraying with NCT 2005, (glycidyl methacrylate functional addition polymer, curable with a half ester of anhydride), available from PPG Industries, Inc. and then baked for 30 minutes at 250° F. The panels were tested for humidity on a QCT humidity evaluation set, at 140° F vapor temperature for 96 hours. The panels were viewed for changes in appearance, then crosshatched and taped, then checked for adhesion. The results are reported hereinbelow:

| Sample | Visual Observation | Crosshatch Adhesion |
|--------|--------------------|--------------------|
| 1 | good | poor, intracoat basecoat failure |
| 2 | poor-dark appearance | poor, intracoat basecoat failure |
| 3 | good | good, no basecoat failure |

Example 3

This example further illustrates the phosphated acrylic polymer of this invention. An epoxy-functional acrylic polymer was prepared and reacted with phosphoric acid in essentially the same manner as described in Example 1.

EP 0 319 971 A2

| Ingredients | Parts by Weight (grams) |
|---|---|
| Charge A | |
| PROPASOL B[1] | 1578 |
| Charge B | |
| Glycidyl methacrylate | 668 |
| Hydroxyethyl methacrylate | 1382.4 |
| Methyl methacrylate | 944.6 |
| Lauryl methacrylate | 1152.0 |
| Charge C | |
| VAZO 67 | 203.4 |
| PROPASOL B | 1106.6 |
| Charge D | |
| VAZO 67 | 18.24 |
| PROPASOL B | 153.6 |
| Charge E | |
| VAZO 67 | 18.24 |
| PROPASOL B | 153.6 |
| Charge F | |
| Phosphoric acid (85%) | 542.2 |

(1) Available from Union Carbide Company.

The resultant phosphated acrylic polymer had an acid value of 65.3 and molecular weight (Mw) of 5.912.

## Claims

1. An improved water-based coating composition containing aluminum flakes and an antigassing agent, the improvement comprising the antigassing agent which is a phosphated acrylic polymer containing at least one hydroxyl group linked to a phosphorous atom, or a salt derivative thereof, and which contains a non-cyclic pendant group of more than six carbon atoms.

2. The coating composition of claim 1 wherein the phosphated acrylic polymer is prepared by reacting phosphoric acid with an epoxy-functional acrylic polymer.

3. The coating composition of claim 2 wherein the epoxy-functional acrylic polymer is prepared by free-radical addition polymerization of an epoxy-functional monomer selected from the group consisting of glycidyl acrylate, glycidyl methacrylate and allyl glycidyl ether.

4. The coating composition of claim 2 wherein the epoxy-functional monomer is copolymerized with another ethylenically unsaturated monomer containing more than six carbon atoms in a non-cyclic group which is pendant to the ethylenic unsaturation.

5. The coating composition of claim 4 wherein the ethylenically unsaturated monomer with a non-cyclic pendant group is lauryl acrylate, lauryl methacrylate, stearyl acrylate or stearyl methacrylate.

6. The coating composition of claim 2 wherein the phosphated acrylic polymer is derived from reacting phosphoric acid with the epoxy-functional acrylic polymer in a mole ratio of about 0.5 to 4:1 of the phosphoric acid to an epoxy-functional acrylic polymer based on moles of phosphorous per epoxy group.

7. The coating composition of claim 6 wherein the ratio is from about 1 to about 2.

8. The coating composition of claim 1 wherein the phosphated acrylic polymer is present in an amount of about 2 to about 30 percent based on the total solids content of the aluminum pigments.

8

9. A process for reducing gassing in a water-based coating composition containing aluminum pigments comprising incorporating in the coating composition an antigassing agent which is a phosphated acrylic polymer as recited in claim 1.

10. The process of claim 9 wherein the phosphated acrylic polymer is as recited in claim 2.